# FASCICULE DE BREVET EUROPEEN

(11) **EP 4 044 874 B1**
(45) Date de publication et mention de la délivrance du brevet: **08.01.2025**
(21) Numéro de dépôt: 20792653.6
(22) Date de dépôt: 16.10.2020
(51) Int. Cl.: A47G 27/04, D06M 17/04, B32B 5/26, D06N 7/00

(54) **TAPIS DE TRANSPORT EN POLYESTER ET PROCÉDÉ DE FABRICATION D'UN TAPIS DE TRANSPORT EN POLYESTER**
POLYESTER-TRANSPORTTEPPICH UND VERFAHREN ZUM HERSTELLEN EINES POLYESTERTRANSPORTTEPPICHS
POLYESTER TRANSPORT CARPET AND METHOD FOR MANUFACTURING A POLYESTER TRANSPORT CARPET

(30) Priorité: 17.10.2019 BE 201905715
(43) Date de publication de la demande: 24.08.2022
(73) Titulaire: De Poortere Deco SA, 7700 Mouscron (BE)
(72) Inventeur: SCHOLLIER, Bert, 7700 Mouscron (BE)
(74) Mandataire: Brantsandpatents bv
(86) Numéro de dépôt international: PCT/EP2020/079237
(87) Numéro de publication internationale: WO 2021/074394

(56) Documents cités:
- EP-A1- 3 192 906
- EP-A1- 3 196 344
- EP-A1- 3 199 678
- EP-A2- 1 533 114
- WO-A1-2017/137409
- WO-A2-2012/076348
- JP-A- 2012 097 373
- US-A1- 2006 240 217
- US-A1- 2009 233 040

## Description

### Domaine technique

L'invention se rapporte à un tapis difficilement inflammable qui convient à l'intérieur de moyens de transport, de préférence d'avions.

L'invention se rapporte, dans un deuxième aspect, également à une méthode pour la fabrication d'un tapis difficilement inflammable qui convient à l'intérieur de moyens de transport, de préférence d'avions.

### État de la technique

Des tapis font partie de l'équipement habituel de l'intérieur d'avions, mais également de tout autre moyen de transport tel que des trains ou des bateaux. A côté du sol, des parties des parois intérieures des avions sont souvent également prévues de tapis. Des tapis dans des avions sont soumis à des exigences très strictes. En particulier, ils doivent être difficilement inflammables et en cas d'incendie, le développement de fumées et de vapeurs toxiques ne peut pas dépasser les exigences strictes. En général, des normes correspondantes sont légalement requises. Notamment dans le cas d'avions de ligne, seuls des tapis peuvent être utilisés qui répondent également aux normes, par exemple la norme ABD 0031 concernant le développement de fumées et de vapeurs toxiques, la norme FAR 25.853 concernant l'inflammabilité et la norme ISO 6356 concernant la tendance de former l'électricité statique en cas de revêtements de sol en textile et en aggloméré laminé.

A côté de ces normes strictes, les compagnies aériennes attendent que les tapis dans les avions soient très résistants à l'usure. Chaque jour, beaucoup de passagers marchent et roulent avec leur valises-trolleys sur le tapis. C'est une charge importante à laquelle le tapis doit être résistant. Les tapis dans les avions sont dès lors remplacés régulièrement.

Aussi, le tapis doit avoir un poids léger par unité de surface pour réduire la consommation de carburant d'un avion. Dans un avion, il y a beaucoup de mètres carrés en tapis. Une réduction du poids par unité de surface du tapis résulte chaque année dans une économie importante pour les compagnies aériennes.

Un tel dispositif est entre autres connu de WO 2007/112608, dans lequel un tapis difficilement inflammable pour des intérieurs d'avion est décrit. Le tapis comprend une couche supérieure tissée, du feutre aiguilleté comme couche inférieure et une couche intermédiaire pour laminer les deux couches mutuellement. C'est un tapis à poids léger par unité de surface qui peut être installé rapidement dans un avion à l'aide de bandes de velcro.

Le dispositif de WO 2015/014335 est également connu. WO 2015/014335 se rapporte à un revêtement de sol en textile, en particulier pour utilisation dans des intérieurs d'avion. Le tapis comprend une couche supérieure, qui peut être un tissu à poils, un tissu lisse ou un tapis tufté, de l'aiguilleté comme couche inférieure et une couche intermédiaire pour laminer les deux couches mutuellement. En-dessous du feutre aiguilleté, un latex en acrylique est appliqué. Cette couche de latex en acrylique évite que le tapis glisse, de sorte qu'il puisse être installé dans l'avion sans utilisation de bandes de velcro, de colle ou de ruban adhésif double face.

JP 2000 308604 décrit un tissu de base pour un tapis pour le contrôle de la poussière.

JP 2000 282347 décrit un tapis à poils.

JP 2005 152159 décrit un tapis tissé.

WO 2005/113229 décrit un hybride de revêtement de sol en vinyle et de tapis rembourré doux.

EP 3 192 906 décrit un tapis résistant à l'effilochage présentant des fils fusibles.

WO 2012/076348 décrit un procédé pour fabriquer un produit textile et produit textile résultant dudit procédé.

EP 3 196 344 décrit un tapis résistant à l'effilochage présentant des fils naturels.

WO 2007/112608 a le désavantage que la couche supérieure est un tissu léger. Par conséquent, le tissu même n'est pas suffisamment résistant aux charges lourdes des passagers et des valises-trolleys de tous les jours et n'a pas suffisamment de stabilité dimensionnelle. Le tissu est renforcé pour l'application d'une colle à base de polyacrylate comme couche intermédiaire entre le tissu et le feutre aiguilleté. La colle lamine le tissu au feutre aiguilleté, mais garde également les liaisons entre les fils de chaîne et de trame croissants ensemble. Pour cela, il est nécessaire que la colle se mêle partiellement avec les fils de chaîne et de trame. La couche intermédiaire alourdit le poids du tapis. En plus, la couche intermédiaire complique le recyclage du tapis parce que les fils du tissu et le feutre aiguilleté peuvent difficilement être séparés de la couche intermédiaire. Cela est un désavantage important vue le remplacement fréquent des tapis dans les avions.

WO 2015/014335 a des désavantages similaires. Dans le cas où un tapis tufté ou d'un tissu à poils est utilisé, la couche supérieure en soi est plus forte et elle a plus de stabilité dimensionnelle, mais les deux sont plus lourds qu'un tissu lisse, ce qui peut alors être désavantageux. En plus, un tapis tufté ou un tissu à poils est moins approprié pour rouler avec des valises-trolleys et il est plus sensible à l'usure. Lors de l'utilisation d'un tissu lisse, il est à nouveau nécessaire de garder les liaisons entre les fils de chaîne et de trame croissants ensemble. WO 2015/014335 utilise le laminage par fusion pour lier la couche supérieure et le feutre aiguilleté et garder les fils de chaîne et de trame ensemble en même temps. Cela mène de nouveau à une augmentation de poids et complique le recyclage de la couche supérieure et du feutre aiguilleté.

La présente invention vise à offrir une solution pour résoudre ces inconvénients.

### Résumé de l'invention

Dans un premier aspect, la présente invention se rapporte à un dispositif selon la revendication 1.

L'avantage d'un tel tapis est qu'une partie des fils de chaîne à la face arrière du tissu tissé machinalement ou mécaniquement se sont au moins partiellement fondus les uns aux autres. Par conséquent, le tissu en soi est déjà assez fort et il a une bonne stabilité dimensionnelle. Suite aux charges des passagers et des valises-trolleys, il ne sera pas arraché si vite. Les fils de chaîne et par conséquent également les fils de trame ont une liberté de mouvement limitée mutuelle, ce qui augmente la résistance à l'usure.

Parce que le tissu est déjà renforcé grâce aux assemblages par fusion, il n'est pas nécessaire d'utiliser une couche intermédiaire lourde pour renforcer le tissu et pour laminer le tissu et le feutre aiguilleté. Une couche intermédiaire plus légère peut être utilisée pour laminer uniquement le tissu et le feutre aiguilleté. Ceci mène à une réduction de poids par unité de surface pour le tapis. Puisque la colle ne doit pas être mélangée partiellement avec les fils de chaîne et de trame, il est plus facile de séparer et de recycler le tissu et le feutre aiguilleté.

En plus, l'invention utilise du 100% polyester (PES) thermoplastique ignifuge pour tant le tissu que le feutre aiguilleté. Par conséquent, le tapis répond aux les normes requises concernant par exemple la norme ABD 0031 pour le développement de fumées et de vapeurs toxiques et la norme FAR 25.853 concernant l'inflammabilité. En plus, il y a un avantage supplémentaire que, suite à l'utilisation uniquement du polyester (PES) ignifuge, le traitement de recyclage du tissu et du feutre aiguilleté se fait simultanément.

Des modes de réalisations préférés du dispositif sont décrits dans les revendications 2 à 9.

Dans un mode de réalisation spécifique, l'invention se rapporte à un dispositif selon la revendication 7. Dans la couche intermédiaire, le PES est également utilisé comme adhésif pour laminer le tissu et le feutre aiguilleté. Ceci améliore le recyclage encore plus. Maintenant, il n'est même plus nécessaire pour séparer le tissu et le feutre aiguilleté. La couche intermédiaire peut même être traitée et recyclée ensemble avec le tissu et le feutre aiguilleté.

Dans un deuxième aspect, la présente invention se rapporte à une méthode selon la revendication 10. Parce que, avant que le tissu et le feutre aiguilleté soient laminés, le tissu est mené le long d'une surface chauffée pour fondre au moins partiellement une partie des fils de chaîne à la face arrière du tissu machinalement ou mécaniquement tissé mutuellement, ladite méthode a entre autres comme avantage qu'un tissu est obtenu qui est suffisamment fort et qui a une stabilité dimensionnelle. Le tissu peut être laminé au feutre aiguilleté avec une couche intermédiaire légère et le tissu et le feutre aiguilleté peut facilement être séparé ultérieurement pour être recyclés.

Des modes de réalisations préférés du dispositif sont décrits dans les revendications dépendantes 11 à 13.

Dans un troisième aspect, la présente invention se rapporte à la fabrication d'un tapis selon le premier aspect, à l'aide d'une méthode selon le deuxième aspect.

### Description des figures

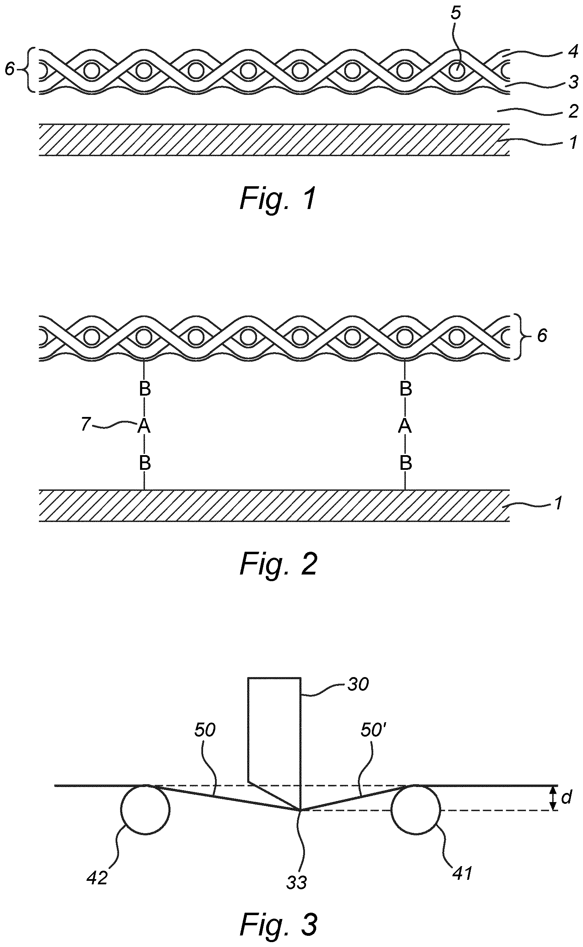

**La** **figure 1** montre une section d'un mode de réalisation de la présente invention.
**La** **figure 2** montre schématiquement un modèle moléculaire d'une liaison entre un tissu et un feutre aiguilleté selon un mode de réalisation de la présente invention.
**La** **figure 3** montre un dispositif approprié pour au moins partiellement fondre une partie des fils de chaîne les uns aux autres selon un mode de réalisation de la méthode de la présente invention.

### Description détaillée

Sauf mention contraire, tous les termes utilisés dans la description de l'invention, y compris des termes techniques et scientifiques, sont utilisés dans le sens comme compris généralement par le spécialiste dans le domaine technique de l'invention. Pour un meilleur jugement de la description de l'invention, les termes suivants sont expliqués explicitement.

"Un", "une", "le", "la" et "les" renvoient dans ce document tant au singulier qu'au pluriel sauf dans le cas le contexte suppose clairement différemment. "Un segment" veut, par exemple, dire un ou plus d'un segment.

Quand "environ" ou "à peu près" est utilisé dans ce document, une grandeur mesurable, un paramètre, une durée ou moment etcétéra veut dire des variations de +/-20% ou moins, de préférence +/-10% ou moins, plus de préférence +/-5% ou moins, encore plus de préférence +/-1% ou moins, et même encore plus de préférence +/-0,1% ou moins de la valeur citée, tant que de telles variations s'appliquent au susdite invention. Cependant, la valeur de la grandeur avec laquelle le terme "environ" ou "à peu près" est utilisé, doit elle-même spécifiquement être exprimée.

Les termes "comprendre", "comprenant", "composer de", "composé de", "prévu de", "comporter", "comportant", "contenir", "contenant" sont des synonymes et sont des termes inclusifs ou ouverts indiquant la présence de ce qui suit, et ne pas excluant ou empêchant d'autres composants, caractéristiques, éléments, membres, phases, connus de ou décrits dans l'état de la technique.

La citation d'intervalles numériques au moyen de points finaux comprend tous les entiers, les fractions et/ou les nombres réels entre les points finaux, y compris ces points finaux.

Le terme "thermoplastique" renvoie à un matériel polymère qui peut être plié, pétri ou liquéfié au-dessus d'une température spécifique et qui durcit substantiellement après refroidissement. Des exemples des polymères thermoplastiques comprennent, mais ne sont pas limités au, vinyle comprenant des thermoplastiques: telles que du polychlorure du vinyle, de l'acétate du polyvinyle, de l'alcool du polyvinyle et d'autres résines de vinyle et de vinylidène et ses copolymères; des composés de polyéthylène: tels que du polyéthylène à basse densité et du polyéthylène à haute densité et ses copolymères; des composés de styrène: tels que l'ABS, le SAN et les polystyrènes et ses copolymères, du polypropylène et ses copolymères; des polyesters saturés et non-saturés; l'acrylique; les polyamides; le plastique de l'engineering tel que l'acetyl, le polycarbonate, le polyimide, le polysulfon, l'oxyde de polyphenylène et les résines de sulfide et autres.

Le terme "flotteur" renvoie à une section d'un fil apparaissant à la surface d'un tissu. Des flotteurs peuvent être des flotteurs supérieurs et/ou des flotteurs inférieurs. Le terme "flotteur supérieur" renvoie à une section d'un fil apparaissant au-dessus d'un tissu. Un flotteur supérieur est formé par un patron de liaison avec une densité de liaison de chaîne:trame de 2:1, 3:1, 4:1, 5:1, 6:1, 7:1, 8:1, 9:1, 10:1 ou plus. Cela veut dire que chaque fil de trame flotte au-dessus au moins deux fils de chaîne, au-dessus au moins 3 fils de chaîne, etc. Alternativement, chaque fil de chaîne flotte au-dessus au moins deux fils de trame, au-dessus au moins 3 fils de trame, etc. Le terme "flotteur inférieur" renvoie à une section d'un fil apparaissant en-dessous d'un tissu. Un flotteur inférieur est formé par un patron de liaison avec une densité de liaison de chaîne:trame de 1:2, 1:3, 1:4, 1:5, 1:6, 1:7, 1:8, 1:9, 1:10 ou moins. Cela veut dire que chaque fils de trame flotte en-dessous au moins deux fils de chaîne, en-dessous au moins 3 fils de chaîne, etc. Alternativement, chaque fil de chaîne flotte en-dessous au moins deux fils de trame, en-dessous au moins 3 fils de trame, etc. Le terme "liaison" est utilisé pour renvoyer au tissage de fils de trame avec des fils de chaîne pour former un tissu.

Le terme "flotteur de trame" renvoie à un flotteur formé par des fils de trame. Le terme "flotteur de chaîne" renvoie à un flotteur formé par des fils de chaîne.

Le numéro de fil renvoie à l'épaisseur du fil. La mesure est indiquée comme le rapport entre le poids et la longueur d'une pièce de fil. Lors de la numérotation de poids, le poids d'une longueur de fil fixe est déterminé. Lors de la numérotation de longueur, la longueur d'un poids de fil fixe est déterminée. Tex est un exemple de numérotation de poids, dans lequel tex indique le poids en gramme de 1000 m de fils. Dtx est utilisé plus souvent, qui est le poids en gramme de 10 000 m de fils. Un autre exemple de la numérotation de poids est denier, dénoté den, dans lequel le poids en gramme de 9000 m de fils est indiqué. Pour des fils comprenant des filaments, la numérotation de poids en denier s'utilise également pour des filaments. Dernier par filament ou DPF renvoie au numéro de poids d'un filament du fil.

Dans un premier aspect, l'invention se rapporte à un tapis difficilement inflammable qui convient à l'intérieur des moyens de transport, plus particulièrement des avions.

Selon un mode de réalisation, le dispositif comprend un tissu tissé machinalement ou mécaniquement avec un poids de maximum 650 g/m², comprenant une face avant comme surface d'utilisation et une face arrière, comprenant des fils de chaîne et de trame d'essentiellement 100% de polyester (PES) thermoplastique ignifuge, un feutre aiguilleté avec un poids de maximum 220 g/m² d'essentiellement 100% de polyester (PES) thermoplastique ignifuge, une couche intermédiaire entre le feutre aiguilleté et le tissu tissé machinalement ou mécaniquement avec un poids de maximum 180 g/m², dans lequel une partie des fils de chaîne à la face arrière du tissu tissé machinalement ou mécaniquement se sont fondus au moins partiellement les uns aux autres.

Le tissu comprend une face avant et une face arrière. La face avant est la surface d'utilisation sur laquelle les passagers marchent et roulent avec leur trolleys et valises. Après l'installation, c'est la partie visible du tapis.

Un tissu a l'avantage par rapport au tapis tufté qu'une base, telle qu'un tissu ou un feutre aiguilleté, n'est pas requise, par quoi un fil à poils est percé. Par l'absence de base dans un tissu, le poids peut être réduit par rapport au tapis tufté. En plus, des tapis tuftés sont souvent à longs poils, ce qui gêne pour rouler avec des trolleys et des valises. En plus, de tels tapis à longs poils s'usent par conséquent plus rapidement.

Le tissu est de préférence un tissu lisse. Un tissu à poils a le même désavantage qu'un tapis tufté à longs poils lors de l'utilisation de trolleys et de valises. Un tissu à poils s'usera de nouveau plus rapidement. Un deuxième désavantage des tissus à poils est qu'à côté du fil de poils qui est utilisé pour former les poils, le fil de chaîne comprend également des fils supplémentaires pour lier les poils. Par conséquent, le tissu devient plus lourd comparé à un tissu lisse.

Le tissu a de préférence une liaison lisse. Lors d'une liaison lisse, chaque fil de trame s'étend alternativement au-dessus et en-dessous un fil de chaîne et chaque fil de chaîne s'étend alternativement au-dessus et en-dessous un fil de trame. Cela est la liaison la plus simple et la plus forte possible. La charge lourde quotidienne du tissu par les passagers et les valises-trolleys peut arracher les fils de chaîne et de trame et réduire la stabilité dimensionnelle. Une liaison forte est avantageuse pour combattre cela. Additionnellement, une forte liaison garantira que les fils de chaîne et de trame seront moins mobiles les uns par rapport aux autres sous l'influence de la charge des passagers et de valises-trolleys, de sorte qu'il y ait moins de friction entre les fils et par conséquent, qu'il y ait moins d'usure. Cela n'a pas d'influence sur l'usure des fils suite aux frictions avec par exemple des chaussures des passagers et des roues de valises-trolleys.

Selon un autre mode de réalisation, la liaison dans le tissu est un reps de trame. Chaque fil de trame s'étend alternativement au-dessus et en-dessous deux fils de chaîne juxtaposés et chaque fil de chaîne alternativement au-dessus et en-dessous un fils de trame. Cela offre un autre effet visuel que lors d'une liaison lisse. Parce que le fil de trame s'étend uniquement au-dessus ou en-dessous deux fils de chaîne juxtaposés lors qu'un reps de trame, ceci est toujours une liaison forte.

Le tissu a de préférence un nombre de flotteur limité, tant des flotteurs supérieurs que des flotteurs inférieurs. Des flotteurs peuvent être utilisés en combinaison avec des fils de couleur différente pour tisser des patrons, des emblèmes ou des indications dans le tissu. Le désavantage de l'utilisation de flotteurs est qu'elle introduit une déviation d'une liaison lisse et dès lors affaiblit la liaison dans le tissu localement.

Des flotteurs ont de préférence une densité de liaison inférieure ou égale à 7:1 et supérieure ou égale à 1:7, plus de préférence une densité de liaison inférieure ou égale à 5:1 et supérieure ou égale à 1:5, et même plus de préférence inférieure ou égale à 2:1 et supérieure ou égale à 1:2.

Selon un mode de réalisation, le tissu est un tissu Jacquard. Un tissu Jacquard comprend des patrons et/ou des emblèmes complexes qui ne peuvent pas être tissés à l'aide de cadres sur une machine à tisser. Le tissage avec des cadres signifie que tous les fils de chaîne qui sont passés à travers un même cadre, se situent à chaque fil de trame dans le tissu soit tous à l'un côté soit à l'autre côté du fil de trame. Un tissu Jacquard est tissé à l'aide d'une machine à tisser avec un Jacquard. Le Jacquard permet qu'un fil de chaîne individuel se situe dans une position à l'un côté ou à l'autre côté du fil de trame, indépendant de la position des autres fils de chaîne.

Le tissu comprend des fils de chaîne et de trame d'essentiellement 100% de polyester (PES) thermoplastique ignifuge. Le PES est très fort, est rigide, a une bonne stabilité dimensionnelle et peu de fluage. Il est donc approprié pour application lors d'une haute charge en utilisation. Le fil n'est pas attaqué par des moisissures et des bactéries. Cela est avantageux parce que dans un avion, on peut renverser des liquides et de la nourriture, ce qui peut mener à des moisissures et des bactéries. Le PES n'absorbe presque pas de liquides. Il est bien résistant aux acides, aux moyens d'oxydation et aux lessives alcalines diluées. Il peut être stérilisé à l'aide de vapeur. Grâce à ces caractéristiques, le tissu est approprié pour être nettoyé de manière efficace et rapide, ce qui est également avantageux pour un tapis dans un avion.

Du PES ignifuge a une résistance à la chaleur excellente. Il est difficilement inflammable, il éteint les flammes et résulte en un développement de fumées limité. Grâce à ces caractéristiques, il est possible de répondre à la norme ABD 0031 concernant le développement de fumées et de vapeurs toxiques et la norme FAR 25.853 concernant l'inflammabilité.

Le tapis comprend également un feutre aiguilleté d'essentiellement 100% de polyester (PES) thermoplastique ignifuge. Par conséquent, le feutre aiguilleté répond à la norme ABD 0031 concernant le développement de fumées et de vapeurs toxiques et la norme FAR 25.853 concernant l'inflammabilité. Le feutre aiguilleté est un textile non-tissé. Le feutre aiguilleté a une épaisseur de 0,5 mm à 4 mm, de préférence de 0,5 mm à 3 mm, plus de préférence de 0,5 mm à 2 mm et même plus de préférence de 0,5 mm à 1 mm.

Le feutre aiguilleté est attaché à la face arrière du tissu à l'aide de la couche intermédiaire. Le feutre aiguilleté est approprié pour renforcer le tissu de manière mécanique. Il est approprié d'offrir de la rigidité au tapis aux bords coupants, pour donner une haute stabilité dimensionnelle au tapis, pour augmenter le confort de marcher sur le tapis et pour améliorer l'isolation sonore et ainsi l'acoustique à l'intérieur d'un avion.

Parce que le feutre aiguilleté est un textile non-tissé, le tapis est approprié pour être installé et remplacé rapidement dans un avion. Le tapis est attaché au sol de l'avion à l'aide de bandes de velcro. Les bandes de velcro sont adhérées au sol de l'avion. Les crochets des bandes de velcro s'accrochent dans les fils du feutre aiguilleté, de sorte que le tapis soit immobilisé. Le tapis peut facilement être enlevé en arrachant le tapis des bandes de velcro. Les bandes de velcro sont réutilisables et restent adhérées au sol de l'avion. Un nouveau tapis selon l'invention peut facilement être installé en adhérant le nouveau tapis aux bandes de velcro déjà présentes, de sorte que le nouveau tapis soit immobilisé.

Une bande de velcro est faite d'un matériel ignifuge et répond à la norme FAR 25.853 (a)(1)(ii) concernant l'inflammabilité. Un avantage non-limité d'un matériel approprié est le polyamide PA6. Le poids est de préférence inférieur à 0,60 kg/m², plus de préférence inférieur à 0,55 kg/m², plus de préférence inférieur à 0,55 kg/m² et même encore plus de préférence inférieur à 0,45 kg/m². Les bandes de velcro comprennent de crochets à une face de la bande, configurés pour accrocher les fils, et à la face opposée, un adhésif. L'adhésif a une force d'adhésion d'au moins 10,0 N/cm sur l'aluminium, de préférence d'au moins 12,0 N/cm sur l'aluminium et même encore plus de préférence d'au moins 13,0 N/cm sur l'aluminium. La force requise pour arracher le tapis des crochets de la bande de velcro est au moins de 0,60 N/cm, de préférence d'au moins 0,70 N/cm et encore plus de préférence au moins de 0,80 N/cm. La force de cisaillement de la bande de velcro s'élève à au moins 20 N/cm², de préférence au moins 25 N/cm² et même plus de préférence au moins 29 N/cm². La tension de boucle s'élève à au moins 5 N/cm², de préférence au moins 7 N/cm² et même plus de préférence au moins 8 N/cm². Un exemple non-limité d'une bande de velcro appropriée est HTH 577 de la firme Velcro.

Le tissu a un poids d'au maximum 650 g/m². Le feutre aiguilleté a un poids d'au maximum 220 g/m². La couche intermédiaire a un poids d'au maximum 180 g/m². Le poids total d'un tapis est donc au maximum 1050 g/m². Un tapis standard peut peser jusqu'à 2000 g/m² et même 3000 g/m². Cela rend un tapis selon l'invention particulièrement approprié pour application dans un avion, où une réduction de poids résulte en une réduction de carburant.

Une partie des fils de chaîne du tissu tissé machinalement ou mécaniquement se sont fondus mutuellement à la face arrière au moins partiellement. Un fil de chaîne s'est fondu de préférence sur au moins 10% de sa longueur, plus de préférence sur au moins 20% de sa longueur, encore plus de préférence sur au moins 30% et même encore plus de préférence sur au moins 50% de sa longueur des fils de chaîne juxtaposés. Parce qu'une partie des fils de chaîne se sont fondus les uns aux autres, les fils de chaîne sont mobiles les uns par rapport aux autres de manière limitée. Dès lors, la stabilité dimensionnelle augmente et il y a moins de friction entre les fils et donc également moins d'usure. Cela renforce le tissu et le tapis. Dans le cas de tapis selon l'état de la technique, le tissu est renforcé par l'application d'une couche de colle ou d'un revêtement par fusion adhérant les noeuds du tissu. La colle ou le revêtement par fusion doit alors pénétrer entre les fils du tissu, de sorte que plus de colle ou de revêtement par fusion est nécessaire que simplement pour attacher le tissu au feutre aiguilleté. Dans le cas d'un tapis selon l'invention, il y a dès lors une réduction de poids supplémentaire par rapport à l'état de la technique. Un autre avantage qu'il n'est pas nécessaire que la colle ou le revêtement par fusion pénètre entre les fils, de sorte qu'il est plus simple de recycler les fils du tissu et le feutre aiguilleté.

Selon un mode de réalisation, le numéro de fil des fils de chaîne et de trame est 1100 dtex à 4400 dtex.

Un numéro de fil supérieur signifie un fil plus lourd et plus épais. Un numéro de fil élevé est indiqué pour des tissus lourds et forts avec une haute stabilité dimensionnelle. Un numéro de fil bas est indiqué pour des tissus légers et souples. Un tapis de transport est de préférence léger, fort et maintient sa forme sous la charge quotidienne des passagers et valises-trolleys. Un numéro de fil de 1100 dtex à 4400 dtex, de préférence de 1500 dtx à 3700 dtex et encore plus de préférence de 1800 dtex à 3100 dtex est indiqué pour un tapis de transport. Le tapis est alors suffisamment léger et fort.

Les fils de trame et de chaîne comprennent des filaments. Pour obtenir un tissu léger, des filaments légers sont indiqués. Le filament a un numéro de poids de 2 DPF à 20 DPF, de préférence de 2 DPF à 15 DPF, plus de préférence de 2 DPF à 10 DPF et même plus de préférence de 2 DPF à 5 DPF.

Dans un mode de réalisation alternatif, il est nécessaire de rendre le tissu plus fort pour obtenir une stabilité dimensionnelle suffisante. Dans ce cas, des filaments légèrement plus forts sont indiqués. Le filament a un numéro de poids de 2 DPF à 20 DPF, de préférence de 5 DPF à 20 DPF, plus de préférence de 8 DPF à 20 DPF et même plus de préférence de 10 DPF à 20 DPF.

Selon un mode de réalisation, des fils de trame et de chaîne sont des soi-disant fils de filament continus et les fils comprennent des filaments continus.

Selon un mode de réalisation, les fils de trame et de chaîne sont des soi-disant fils de filament continus et les fils comprennent des filaments continus, dans lequel la texture des fils est modifiée à l'aide de jets d'air, dans lequel de petites boucles sont formées. Cela offre une isolation et résistance supplémentaire.

Selon un mode de réalisation, le nombre de fils de chaîne par cm de tissu s'élève à 8 à 30.

Le nombre de fils de chaîne par cm de tissu détermine aussi la densité du tissu. Un tissu plus dense sera plus fort et aura plus de stabilité dimensionnelle, mais il sera également plus lourd. En cas d'un nombre plus bas de fils de chaîne par cm de tissu, le tissu est plus léger et souple, mais il sera moins fort et aura moins de stabilité dimensionnelle. Le nombre de fils de chaîne par cm de tissu s'élève de 8 à 30, de préférence de 13 à 25, encore plus de préférence de 15 à 20. Le tapis est alors suffisamment léger et fort.

Selon un mode de réalisation, le nombre de fils de trame par cm de tissu s'élève à 3 à 10.

Le nombre de fils de trame par cm de tissu détermine aussi la densité du tissu. Un tissu plus dense sera plus fort et aura plus de stabilité dimensionnelle, mais il sera également plus lourd. En cas d'un nombre plus bas de fils de trame par cm de tissu, le tissu est plus léger et souple, mais il sera moins fort et aura moins de stabilité dimensionnelle. Le nombre de fils de trame par cm de tissu s'élève de 3 à 10, de préférence de 3 à 8, encore plus de préférence de 3 à 7. Le tapis est alors suffisamment léger et fort.

Selon un mode de réalisation, le poids par unité de surface du tapis s'élève maximum à 950 g/m².

Le poids du tapis est déterminé par le poids du tissu, de la couche intermédiaire et du feutre aiguilleté. Le poids du tapis peut être optimisé par un choix méticuleux du tissu, de la couche intermédiaire et du feutre aiguilleté. Un tissu plus lourd est en soi déjà plus fort et requiert un feutre aiguilleté plus mince pour une bonne stabilité dimensionnelle. Parce qu'une partie des fils de chaîne du tissu tissé machinalement ou mécaniquement se sont fondus mutuellement à la face arrière au moins partiellement, la couche intermédiaire est minimale. La couche intermédiaire est la liaison entre le tissu et le feutre aiguilleté. Un tissu plus léger requiert un feutre aiguilleté légèrement plus épais pour une bonne stabilité dimensionnelle. La couche intermédiaire peut toujours être minimale. Grâce à un bon choix de l'épaisseur du tissu, entre autres déterminé par le numéro de fil, le nombre de fils de chaîne par cm de tissu et le nombre de fils de trame par cm de tissu, et un feutre aiguilleté approprié, le poids du tapis s'élève maximum à 950 g/cm², de préférence maximum à 925 g/cm², encore plus de préférence maximum à 900 g/cm² et même encore plus de préférence à 875 g/cm².

Selon un mode de réalisation, le tissu tissé machinalement ou mécaniquement et le feutre aiguilleté sont laminés l'un à l'autre à l'aide de la couche intermédiaire.

Le tissu tissé machinalement ou mécaniquement et le feutre aiguilleté sont liés mutuellement. Le feutre aiguilleté offre la stabilité dimensionnelle et renforcent le tissu parce qu'elles sont liées au tissu. Le tissu et le feutre aiguilleté sont laminés l'un à l'autre à l'aide de la couche intermédiaire.

Selon un mode de réalisation, la couche intermédiaire comprend l'adhésif PES.

Grâce à l'utilisation de PES en tant qu'adhésif, le tapis de transport peut être recyclé facilement. Tant le tissu, le feutre aiguilleté que l'adhésif dans la couche intermédiaire comprennent du PES, de sorte que le tapis complet puisse être recyclé collectivement. Il n'est pas nécessaire de séparer le tissu et le feutre aiguilleté. L'adhésif PES est par exemple un film adhésif par fusion de PES, une poudre par fusion de PES ou un autre moyen approprié.

Selon un mode de réalisation, le tapis comprend des molécules réactives pour former des interactions covalentes thermoréversibles dans la couche intermédiaire.

Ce mode de réalisation permet d'inverser les interactions covalentes en réchauffant le tapis. Ceci contribue à un recyclage simple du tapis. En inversant la réaction entre les molécules réactives, la structure de liaison originale dans la couche intermédiaire, liant le tissu et le feutre aiguilleté, se décompose en molécules plus petites. Ces molécules plus petites peuvent être enlevées plus facilement du tissu et du feutre aiguilleté qu'une colle traditionnelle ou un revêtement par fusion. Il est par exemple possible de dissoudre les molécules plus petites résiduelles dans un solvant doux et de récupérer ces molécules du solvant par la suite. Une autre possibilité est de recycler les molécules ensemble avec le tissu et/ou le feutre aiguilleté, par exemple en mélangeant les molécules avec les fils du tissu et/ou du filament du feutre aiguilleté.

Des réactions covalentes thermoréversibles sont déjà connues de la chimie. Une liste non-limitative des exemples sont des réactions Michael, des réactions de dimérisation nitroso, des réactions anhydrides cycliques dans lequel les composés d'ester sont composés, des réactions de formation d'uréthane, des réactions de formation d'ions aliphatiques et des réactions de formation d'adduction de phénol-azlactone.

Selon un autre mode de réalisation, la réaction est entre une première molécule, comprenant un groupe de diène conjugué et une deuxième molécule comprenant un groupe diénophyle. On renvoie à de telles réactions entre un groupe de diène conjugué et un groupe diénophyle par des réactions Diels-Alder. L'avantage des réactions Diels-Alder est que l'inversibilité thermique peut se passer à des températures relativement basses. Cela peut éviter des dommages éventuels physiques et chimiques au tissu et au feutre aiguilleté.

Un diène conjugué est un hydrogène acyclique avec une structure moléculaire comprenant deux composés doubles hydrogène-hydrogène, séparés par un composé simple. Le groupe de diène conjugué peut faire partie d'une molécule comprenant d'autres atomes que le carbone et l'hydrogène. Un diénophyle est le composant alcène (double composé du carbone) d'une réaction entre un alcène et un diène. Le groupe diénophyle peut faire partie d'une molécule comprenant d'autres atomes que le carbone et l'hydrogène.

Selon un autre mode de réalisation, le groupe diène est un furane (tel que le furfuryl), anthracène, thiophène ou pyrrole. Le groupe diénophyle est un maléimide, fumarate, maléate ou alkyne. Ces groupes sont appropriés pour application dans l'invention. Il est clair que ce mode de réalisation n'exclut pas l'utilisation d'autres groupes diène et/ou groupes diénophyles.

Selon un mode de réalisation, une partie des fils de trame à la face arrière du tissu tissé machinalement ou mécaniquement se sont fondus au moins partiellement avec une partie des fils de chaîne.

Parce qu'une partie des fils de trame se sont fondus avec les fils de chaîne, les fils de trame et de chaîne sont mobiles les uns par rapport aux autres de manière limitée. Une partie des noeuds des fils de trame et de chaîne sont dès lors fixés. Dès lors, la stabilité dimensionnelle est augmentée et il y a moins de friction entre les fils mutuels et donc également moins d'usure. Cela renforce le tissu et le tapis. Dans le cas de tapis selon l'état de la technique, le tissu est renforcé par l'application d'une couche de colle ou d'un revêtement par fusion adhérant les noeuds du tissu. La colle ou le revêtement par fusion doit alors pénétrer entre les fils du tissu, de sorte que plus de colle ou de revêtement par fusion est nécessaire que simplement pour attacher le tissu au feutre aiguilleté. Dans le cas d'un tapis selon l'invention, il y a dès lors une réduction de poids supplémentaire par rapport à l'état de la technique. Un autre avantage qu'il n'est pas nécessaire que la colle ou le revêtement par fusion pénètre entre les fils, de sorte qu'il est plus simple de recycler les fils du tissu et le feutre aiguilleté.

Dans un deuxième aspect, l'invention se rapporte à une méthode pour la fabrication d'un tapis difficilement inflammable qui convient à l'intérieur de moyens de transport, en particulier d'avions.

Selon un mode de réalisation, la méthode comprend les phases du tissage machinal ou mécanique d'un tissu, comprenant un face avant comme surface d'utilisation et une face arrière, comprenant des fils de chaîne et de trame d'essentiellement 100% de polyester (PES) thermoplastique ignifuge, la fabrication d'un feutre aiguilleté d'essentiellement 100% de polyester (PES) thermoplastique ignifuge, la lamination du feutre aiguilleté au tissu à l'aide d'une couche intermédiaire, dans lequel la méthode comprend la phase supplémentaire avant la lamination de mener la face arrière du tissu le long d'une surface chauffée pour faire fondre au moins partiellement une partie des fils de chaîne à la face arrière du tissu tissé machinalement ou mécaniquement.

Le tissu a préférablement un poids de maximum 650 g/m². Le feutre aiguilleté a un poids de maximum 220 g/m². La couche intermédiaire a un poids de maximum 180 g/m².

Le tissage machinal ou mécanique de tissus à l'aide d'un métier est connu dans l'état de la technique.

La formation d'un feutre aiguilleté à partir de filaments est connue dans l'état de la technique. Cela peut se passer de deux manières: une méthode continue et une méthode discontinue. Dans le cas de la méthode continue, des filaments sont formés directement dans un processus ininterrompu par l'extrusion à partir de grains, un feutre aiguilleté est formé et des filaments sont liés dans le feutre aiguilleté. Dans le cas de la méthode discontinue, les fils de filament sont menés à une machine de feutre aiguilleté à partir de bobines. Là, les fils de filament sont ouverts, transformés dans la forme souhaitée en feutre aiguilleté et puis liés. De préférence, une méthode mécanique est utilisée pour la liaison des filaments dans le feutre aiguilleté. Un exemple est l'aiguilletage du feutre aiguilleté à l'aide d'aiguilles avec des barbelures. Par l'aiguilletage, les filaments sont mêlés, mais il y a également encore beaucoup de bouts de filament détachés ou de boucles qui peuvent s'accrocher dans les crochets de la bande velcro à l'aide de la bande velcro lors de l'attachement au sol d'avion. Le renforcement chimique du feutre aiguilleté est moins préféré car cela peut avoir une influence sur le recyclage du feutre aiguilleté. Le renforcement thermique du feutre aiguilleté peut réduire le nombre de boucles ou de bouts de filament détachés qui peuvent être accrochés par les crochets d'une bande velcro.

Le feutre aiguilleté est laminé au tissu. Pour la phase de lamination, la face arrière du tissu est dirigée à travers une surface chauffée pour faire fondre au moins partiellement une partie des fils de chaîne les uns aux autres. Le tissu est dirigé à travers une série de rouleaux de support. Entre deux rouleaux de support, il y a une surface chauffée. La surface chauffée pousse contre la face arrière du tissu. La surface chauffée est de préférence réglable de sorte qu'elle puisse pousser plus ou moins contre la face arrière du tissu. La face arrière indique ici une face du tissu et non la position de la surface chauffée par rapport au tissu. La surface chauffée peut est positionnée horizontalement ou verticalement, au-dessus, en-dessous, à gauche ou à droite, devant ou sous le tissu. Il est clair pour l'homme du métier comment la disposition des rouleaux de support et l'orientation du tissu doivent être adaptées de sorte que la surface chauffée pousse contre la face arrière du tissu.

Selon un mode de réalisation, la surface chauffée est une plaque chauffante, un rouleau chauffant, une feuille en métal avec une pointe, une autre surface appropriée ou une combinaison du précédent.

Parce que le tissu est mené avec sa face arrière à travers la surface chauffée, une partie des fils de chaîne se fondent au moins partiellement les uns aux autres. En poussant la surface chauffée plus ou moins contre les fils de chaîne, le degré de fonte des fils de chaîne peut être modifié. D'autres paramètres qui l'influencent sont la température de la surface chauffée et la vitesse avec laquelle le tissu est dirigé à travers le corps chauffé.

Le tissu peut être dirigé à travers un, deux, trois ou plusieurs corps chauffés, dépendant du degré souhaité dans lequel une partie des fils de chaîne se sont fondus les uns aux autres.

Selon un mode de réalisation, à l'autre face du tissu, face au corps chauffé, un rouleau de support supplémentaire peut être positionné. Ce rouleau de support soutient le tissu pendant que le corps chauffé pousse contre la face arrière du tissu. En utilisant un rouleau de support face au corps chauffé, il est possible de pousser la surface chauffée plus fortement contre le tissu sans que le tissu ne déchire.

Selon un mode de réalisation, la lamination comprend l'utilisation de PES en tant qu'adhésif dans la couche intermédiaire.

Selon un mode de réalisation, un film autoadhésif par fusion PES est utilisé pendant la lamination. Le tissu est déroulé d'un premier rouleau, le film autoadhésif par fusion PES d'un deuxième rouleau et le feutre aiguilleté d'un troisième rouleau. Le tissu, le film autoadhésif et le feutre aiguilleté sont assemblés, dans lequel le film autoadhésif touche à la face arrière du tissu et au feutre aiguilleté. Le tout est chauffé, de sorte que le film autoadhésif par fusion PES devienne collant, et soit poussé fortement l'un contre l'autre entre deux rouleaux. Après refroidissement, le tissu et le feutre aiguilleté sont assemblés par le film autoadhésif. Le film autoadhésif forme une couche intermédiaire.

Selon un mode de réalisation, une poudre par fusion PES est utilisé pendant la lamination. Le tissu est déroulé d'un premier rouleau et le feutre aiguilleté d'un deuxième rouleau. Le poudre par fusion PES est distribué à l'aide d'un distributeur approprié à travers soit la face arrière du tissu soit une face du feutre aiguilleté soit la face arrière du tissu et une face du feutre aiguilleté. Le tissu et le feutre aiguilleté sont assemblés, dans lequel la face arrière du tissu est orientée vers le feutre aiguilleté et le poudre par fusion PES se trouve entre le tissu et le feutre aiguilleté. Le tout est chauffé, de sorte que le poudre par fusion PES devienne collant, et est poussé fortement l'un contre l'autre entre deux rouleaux. Après refroidissement, le tissu et le feutre aiguilleté sont assemblés à l'aide de la poudre par fusion PES. Le poudre par fusion PES forme une couche intermédiaire.

Selon un mode de réalisation, la lamination comprend l'utilisation de molécules réactives pour former des interactions covalentes thermoréversibles dans la couche intermédiaire.

Selon un mode de réalisation, une composition comprenant des molécules réactives A est appliquée à la face arrière du tissu. A une face du feutre aiguilleté, une composition comprenant des molécules réactives B est appliquée. Le tissu et le feutre aiguilleté sont assemblés, dans lequel la face arrière du tissu et la face du feutre aiguilleté avec là-dessus la composition se touchent et dans lequel les circonstances sont telles que les molécules A et B réagissent et forment ainsi des interactions covalentes thermoréversibles. Une couche intermédiaire mince est formée qui relie le tissu et le feutre aiguilleté.

Selon un autre mode de réalisation, une composition comprenant des molécules réactives B est appliquée à la face arrière du tissu. A une face du feutre aiguilleté, une composition comprenant des molécules réactives B est également appliquée. Le tissu et le feutre aiguilleté sont assemblés, dans lequel la face arrière du tissu et la face du feutre aiguilleté avec là-dessus la composition sont orientés l'un vers l'autre. Entre le tissu et le feutre aiguilleté, une couche intermédiaire mince comprenant des molécules réactives A est appliquée. Les circonstances sont telles que les molécules A et B réagissent et forment ainsi des interactions covalentes thermoréversibles. La couche intermédiaire mince relie le tissu et le feutre aiguilleté.

Selon un mode de réalisation, la méthode comprend la phase supplémentaire avant la lamination de diriger la face arrière du tissu le long d'une surface chauffée pour faire fondre au moins partiellement une partie des fils de trame à la face arrière du tissu tissé machinalement ou mécaniquement avec une partie des fils de chaîne.

En augmentant la température de la au moins une surface chauffée, ou suite à la vitesse avec laquelle le tissu est dirigé le long de la surface chauffée, ou suite à par exemple la pression avec laquelle la surface chauffée pousse contre la face arrière du tissu, il est possible de faire fondre au moins partiellement non seulement une partie des fils de chaîne, mais également de faire fondre au moins partiellement une partie des fils de trame au fils de chaîne. Cela offre un tissu encore plus fort, dans lequel les fils de trame et de chaîne sont moins mobiles les uns par rapport aux autres, ce qui augmente la stabilité dimensionnelle et réduit la friction mutuelle et donc l'usure.

Dans un troisième aspect, l'invention se rapporte à la fabrication d'un tapis selon le premier aspect, à l'aide d'une méthode selon le deuxième aspect.

Il sera clair pour l'homme du métier qu'un tapis selon la présente invention est approprié non seulement pour utilisation dans des avions, mais également pour utilisation dans d'autres moyens de transport, tels que par exemple des trains et des bateaux, où un poids bas, une résistance à l'usure élevée et le fait qu'il est difficilement inflammable, sont requis.

La présente invention se décrite maintenant plus en détail référant aux exemples ou figures non-limitatives.

### DESCRIPTION DE FIGURE

**La** **figure 1** montre une section d'un mode de réalisation de la présente invention.
   Un tapis de transport en polyester comprend un feutre aiguilleté 1, qui est laminé à un tissu lisse 6 au moyen d'une couche intermédiaire 2. La couche intermédiaire 2 comprend l'adhésif PES ou des molécules réactives pour former des interactions covalentes thermoréversibles. Le tissu lisse 6 comprend un premier groupe de fils de chaîne 3 et un deuxième groupe de fils de chaîne 4. Les fils de chaîne 3 et 4 sont juxtaposés alternativement dans la direction longitudinale du tissu. Le tissu lisse 6 comprend des fils de trame 5. Les fils de trame 5 se situent transversalement sur la direction des fils de chaîne 3 et 4. Un premier fil de trame 5 se situe en-dessous des fils de chaîne 3 et au-dessus des fils de chaîne 4. Le suivant fil de trame 5 se situe ensuite au-dessus des fils de chaîne 3 et en-dessous des fils de chaîne 4. Le tissu est ensuite constitué de cette manière. La liaison obtenue est une liaison plate. Un reps de trame peut être obtenu de manière similaire si des groupes de deux fils de chaîne 3 et des groupes de deux fils de chaîne 4 sont juxtaposés alternativement dans la direction longitudinale du tissu. Une partie des fils de chaîne 3 et 4 se sont fondus mutuellement au moins partiellement à la face arrière du tissu lisse 6. Cela est montré sur la figure 1. De préférence, une partie des fils de chaîne 3 et 4 se sont fondus au moins partiellement à la face arrière du tissu lisse 6 à une partie des fils de trame 5.
**La** **figure 2** montre schématiquement un modèle moléculaire d'une liaison entre un tissu et un feutre aiguilleté selon un mode de réalisation de la présente invention.
   Une composition comprenant des molécules réactives B est appliquée à la face arrière du tissu 6 et à une face du feutre aiguilleté 1. La face arrière du tissu 6 et la face avec là-dessus la composition appliquée comprenant des molécules réactives B du feutre aiguilleté 1 se sont rapprochées, avec entre ces faces, une couche intermédiaire avec des molécules réactives A. Après que la réaction entre les molécules A et B a eu lieu, une liaison 7 entre le tissu 6 et le feutre aiguilleté 1 est formée. La liaison 7 utilise les interactions covalentes entre les molécules A et B.
**La** **figure 3** montre un dispositif approprié pour au moins partiellement fondre une partie des fils de chaîne les uns aux autres selon un mode de réalisation de la méthode de la présente invention.

Le tissu 50' est dirigé à travers des rouleaux de support 41 et 42. La direction est de rouleau de support 41 à rouleau de support 42. Entre les deux rouleaux de support 41 et 42, se trouve la surface chauffée 30. La surface chauffée pousse avec une pointe 33 contre la face arrière du tissu 50'. Une partie des fils de chaîne se sont fondus mutuellement au moins partiellement à la face arrière du tissu 50'. Les fils de chaîne fondus sont distribués jusqu'à une surface essentiellement plate grâce au mouvement à travers la pointe 33 de la surface chauffée 30. Après, ils refroidissent et forment le tissu 50, qui est plus fort, qui a une plus grande stabilité dimensionnelle et qui est plus résistent à l'usure que le tissu 50'.

La surface chauffée 30 peut être déplacée sur une distance d. Cette distance d est par exemple de 0 mm à 50 mm. En prenant une distance d supérieure à 0 mm, la pointe 33 de la surface chauffée 30 pousse contre la face arrière du tissu. La distance requise d est déterminée par le résultat souhaité de la fonte au moins partielle d'une partie des fils de chaîne, ensemble avec la température de la surface chauffée 30 et de sa pointe 33, la vitesse avec laquelle le tissu 50' est dirigé à travers la pointe 33 et le tissu 50' même. Si un tissu 50' n'est pas résistant à une distance grande d, d'autres variations des paramètres vitesse, distance d et température de la surface chauffée 30 et de sa pointe 33 sont possibles pour obtenir le résultat souhaité.

### EXEMPLES

L'invention sera maintenant décrite à l'aide de l'exemple suivant, sans y être limité.

L'exemple se rapporte à un mode de réalisation d'un tapis de transport en polyester, plus particulièrement un tapis d'avion, selon l'invention. Le tapis d'avion comprend un tissu lisse, une couche intermédiaire et un feutre aiguilleté.

Tant le tissu lisse que le feutre aiguilleté comprennent 100% de PES ignifuge. La couche intermédiaire comprend une colle PES. Par conséquent, le tapis d'avion est 100% recyclable de manière simple après qu'il a été remplacé par un nouveau tapis d'avion.

Le feutre aiguilleté est un textile non-tissé. Sur le sol d'avion, des bandes de velcro du type HTH577 sont collées. Les maintes bouts de filament détachés ou les boucles dans le feutre aiguilleté s'accrochent dans les crochets de la bande de velcro. Par conséquent, le tapis d'avion peut rapidement être installé dans l'avion, mais aussi être rapidement remplacé. Le tapis d'avion doit simplement être arraché des bandes de velcro et le nouveau tapis d'avion doit être adhéré à la bande de velcro. Il n'y a pas de restes de colle qui doivent être enlevés du sol d'avion. Il n'y a pas non plus de restes de colle sur le feutre aiguilleté, ce qui simplifie le recyclage.

Le tissu comprend des fils de chaîne et de trame avec un numéro de fil de 2200 dtex. Les fils ont un allongement de rupture d'en moyenne 30% et une résistance à la traction minimale de 3 g/den, testé selon ISO 2062. Le rétrécissement moyen à l'ébullition des fils s'élève, selon la norme ISO 12590, en moyenne 1,5%. Il y a 17 fils de chaîne par cm de tissu et 5 fils de trame par cm de tissu. Cela offre un tissu fort, qui est également léger. Le poids du tissu est limité à 570 g/m².

Une partie des fils de chaîne et des fils de trame se sont fondus mutuellement au moins partiellement à la face arrière du tissu. Cela renforce le tissu et augmente la stabilité dimensionnelle. Les fils de chaîne et de trame sont moins mobiles les uns par rapport aux autres, ce qui mène à moins de friction entre les fils de chaîne et de trame et donc également moins d'usure lors de la charge quotidienne des passagers et des valises-trolleys. Parce que le tissu est plus fort et a une plus grande stabilité dimensionnelle suite à la fonte au moins partielle d'une partie des fils de chaîne et de trame, il n'est pas nécessaire d'utiliser de la colle pour fixer les noeuds entre les fils de chaîne et de trame. La couche intermédiaire, comprenant de la colle, est donc plus légère. Le poids de la couche intermédiaire est limité à 130 g/m².

Le feutre aiguilleté sont appropriées pour donner la stabilité dimensionnelle nécessaire au tapis d'avion. Le feutre aiguilleté est approprié pour augmenter le confort de marche des passagers sur le tapis d'avion et pour servir d'isolation sonore. Parce que le tissu est plus fort suite à la fonte au moins partielle d'une partie des fils de chaîne et de trame, le tissu a déjà une certaine stabilité dimensionnelle. Par conséquent, il est possible d'utiliser un feutre aiguilleté plus mince pour le tapis d'avion. Le feutre aiguilleté a un poids maximal de 150 g/m². Le poids total d'un tapis est par conséquent 850 g/m².

Le tapis d'avion a été testé selon la norme FAR 25.853 concernant l'inflammabilité, plus particulièrement FAR 25.853(A)-App.f Part I para (a)(1)(ii) Measurement of flammability of aircraft material. Le test a été réalisé dans une armoire à l'abri du courant d'air, conformément au « Fédéral Test Method Standard 191, Method 5903.2 ». Trois échantillons du tapis d'avion de 75 mm sur 305 mm ont été exposés pendant 60 s à une flamme d'un bec Bunsen avec une température d'au moins 843°C. Les échantillons étaient suspendus de manière verticale dans leur direction longitudinale à 20 mm au-dessus de la pointe du bec Bunsen. La flamme du bec Bunsen a une hauteur de 40 mm mesurée à partir de la pointe du bec Bunsen. Le tapis d'avion a ensuite brûlé en moyenne au maximum 2 s sur une longueur et largeur inférieures à 80 mm. Il n'y avait pas de parties brûlantes du tapis d'avion qui tombaient. Par conséquent, le tapis d'avion répond à la norme, qui requiert que, après enlèvement de la flamme, le tapis continue à brûler au maximum 15 s, que le tapis brûle sur une longueur maximale de 152 mm et que des parties brûlantes du tapis brûlent au maximum 5 s.

Le tapis d'avion a été soumis à un test Vetterman et à un test Lisson. Le test Vetterman simule l'usure dans des conditions de laboratoire. Le test Lisson détermine la perte de massa et la liaison de fibres ou de fils, après que le tapis d'avion a été soumis à un nombre prescrit de passages doubles d'une roue quadrupède. Pour les deux tests, le tapis d'avion a obtenu la classification la plus haute de 33, ce qui signifie qu'il est approprié pour une utilisation intensive lourde. Le tapis d'avion est approprié pour la charge lourde quotidienne des passagers et des valises-trolleys.

Le tapis d'avion répond à la norme ISO 6356 concernant la tendance de formation d'électricité statique chez des revêtements de sol en textile et aggloméré laminé.

## Revendications

1. Un tapis difficilement inflammable qui convient à l'intérieur de moyens de transport, de préférence d'avions, comprenant:
- un tissu tissé mécaniquement avec un poids maximal de 650 g/m², comprenant une face avant comme surface d'utilisation et une face arrière, comprenant des fils de chaîne et de trame d'essentiellement 100% polyester thermoplastique ignifuge,
- un feutre aiguilleté avec un poids maximal de 220 g/m² d'essentiellement 100% polyester thermoplastique ignifuge,
- une couche intermédiaire entre le feutre aiguilleté et le tissu tissé mécaniquement avec un poids maximal de 180 g/m²,
**caractérisé en ce qu'**une partie des fils de chaîne à la face arrière du tissu mécaniquement tissé se sont au moins partiellement fondus les uns aux autres.

2. Tapis selon la revendication 1, **caractérisé en ce que** le numéro de fil des fils de chaîne et de trame est 1100 dtex à 4400 dtex.

3. Tapis selon la revendication 1 ou 2, **caractérisé en ce que** le nombre de fils de chaîne par cm de tissu s'élève à 8 à 30.

4. Tapis selon une des revendications précédentes 1 à 3, **caractérisé en ce que** le nombre de fils de trame par cm de tissu s'élève à 3 à 10.

5. Tapis selon une des revendications précédentes 1 à 4, **caractérisé en ce que** le poids du tapis s'élève à au maximum 950 g/m².

6. Tapis selon une des revendications précédentes 1 à 5, **caractérisé en ce que** le tissu tissé mécaniquement et le feutre aiguilleté sont laminés l'un à l'autre à l'aide de la couche intermédiaire.

7. Tapis selon une des revendications précédentes 1 à 6, **caractérisé en ce que** la couche intermédiaire comprend l'adhésif polyester.

8. Tapis selon une des revendications précédentes 1 à 6, **caractérisé en ce que** le tapis comprend des molécules réactives pour la formation des interactions covalentes thermoréversibles dans la couche intermédiaire, dans lesquelles les interactions covalentes thermoréversibles sont des réactions Michael, des réactions de dimérisation nitroso, des réactions anhydrides cycliques dans lequel les composés d'ester sont composés, des réactions de formation d'uréthane, des réactions de formation d'ions aliphatiques, des réactions de formation d'adduction de phénol-azlactone ou des réactions entre une première molécule, comprenant un groupe de diène conjugué et une deuxième molécule comprenant un groupe diénophyle.

9. Tapis selon une des revendications précédentes 1 à 8, **caractérisé en ce qu'**une partie des fils de trame du tissu tissé mécaniquement s'est au moins partiellement fondu avec une partie des fils de chaîne.

10. Méthode pour la fabrication d'un tapis difficilement inflammable qui convient à l'intérieur de moyens de transport, de préférence d'avions, comprenant:
- le tissage mécanique d'un tissu avec un poids maximal de 650 g/m², comprenant une face avant comme surface d'utilisation et une face arrière, comprenant des fils de chaîne et de trame d'essentiellement 100% polyester thermoplastique ignifuge,
- la fabrication d'un feutre aiguilleté avec un poids maximal de 220 g/m² d'essentiellement 100% de polyester thermoplastique ignifuge,
- la lamination du feutre aiguilleté avec un poids maximal de 180 g/m² au tissu à l'aide d'une couche intermédiaire,
**caractérisé en ce que** la méthode comprend la phase supplémentaire avant la lamination de diriger la face arrière du tissu le long d'une surface chauffée pour faire fondre au moins partiellement une partie des fils de chaîne à la face arrière du tissu tissé mécaniquement les uns aux autres.

11. La méthode selon la revendication 10, **caractérisé en ce que** la lamination comprend l'utilisation de PES en tant qu'adhésif dans la couche intermédiaire.

12. La méthode selon la revendication 10, **caractérisé en ce que** la lamination comprend l'utilisation de molécules réactifs pour former des interactions covalentes thermoréversibles dans la couche intermédiaire, dans lesquelles les interactions covalentes thermoréversibles sont des réactions Michael, des réactions de dimérisation nitroso, des réactions anhydrides cycliques dans lequel les composés d'ester sont composés, des réactions de formation d'uréthane, des réactions de formation d'ions aliphatiques, des réactions de formation d'adduction de phénol-azlactone ou des réactions entre une première molécule, comprenant un groupe de diène conjugué et une deuxième molécule comprenant un groupe diénophyle.

13. La méthode selon la revendication 10, 11 ou 12, **caractérisé en ce que** la méthode comprend la phase supplémentaire avant la lamination de diriger la face arrière du tissu le long d'une surface chauffée pour faire fondre au moins partiellement une partie des fils de trame à la face arrière du tissu tissé mécaniquement avec une partie des fils de chaîne.

## Patentansprüche

1. Ein flammhemmender Teppich, der für die Innenausstattung von Transportmitteln, vorzugsweise Flugzeugen, geeignet ist, umfassend:
- ein maschinell gewebtes Gewebe mit einem Gewicht von höchstens 650 g/m², umfassend eine Vorderseite als Nutzfläche und eine Rückseite, umfassend Kett- und Schussfäden aus im Wesentlichen 100% thermoplastischem, flammhemmendem Polyester,
- einen Nadelfilz mit einem Gewicht von maximal 220 g/m² aus im Wesentlichen 100% thermoplastischem flammhemmendem Polyester,
- eine Zwischenschicht zwischen dem Nadelfilz und dem maschinell gewebtem Gewebe mit einem Gewicht von maximal 180 g/m²,
**dadurch gekennzeichnet, dass** ein Teil der Kettfäden auf der Rückseite des maschinell gewebten Gewebes zumindest teilweise miteinander verschmolzen sind.

2. Teppich nach Anspruch 1, **dadurch gekennzeichnet, dass** die Fadenzahl der Kett- und Schussfäden 1100 dtex bis 4400 dtex beträgt.

3. Teppich nach Anspruch 1 oder 2, **dadurch gekennzeichnet, dass** die Anzahl der Kettfäden pro cm Gewebe 8 bis 30 beträgt.

4. Teppich nach einem der vorhergehenden Ansprüche 1 bis 3, **dadurch gekennzeichnet, dass** die Anzahl der Schussfäden pro cm Gewebe 3 bis 10 beträgt.

5. Teppich nach einem der vorhergehenden Ansprüche 1 bis 4, **dadurch gekennzeichnet, dass** das Gewicht des Teppichs maximal 950 g/m² beträgt.

6. Teppich nach einem der vorhergehenden Ansprüche 1 bis 5, **dadurch gekennzeichnet, dass** das maschinell gewebte Gewebe und der Nadelfilz mit Hilfe der Zwischenschicht miteinander laminiert sind.

7. Teppich nach einem der vorhergehenden Ansprüche 1 bis 6, **dadurch gekennzeichnet, dass** die Zwischenschicht Polyesterkleber umfasst.

8. Teppich nach einem der vorhergehenden Ansprüche 1 bis 6, **dadurch gekennzeichnet, dass** der Teppich reaktive Moleküle zur Ausbildung thermoreversibler kovalenter Wechselwirkungen in der Zwischenschicht umfasst, wobei es sich bei den thermoreversiblen kovalenten Wechselwirkungen um Michael-Reaktionen, Nitrosodimerisierungsreaktionen, zyklische Anhydridreaktionen, bei denen Esterverbindungen aufgebaut werden, Urethanbildungsreaktionen, aliphatische Ionenbildungsreaktionen, Phenol-Azlacton-Adduktionsbildungsreaktionen oder Reaktionen zwischen einem ersten Molekül, das eine konjugierte Diengruppe umfasst, und einem zweiten Molekül, das eine Dienophilgruppe umfasst, handelt.

9. Teppich nach einem der vorhergehenden Ansprüche 1 bis 8, **dadurch gekennzeichnet, dass** ein Teil der Schussfäden des maschinell gewebten Gewebes zumindest teilweise mit einem Teil der Kettfäden verschmolzen ist.

10. Verfahren zur Herstellung eines für die Innenausstattung von Transportmitteln, vorzugsweise Flugzeugen, geeigneten flammhemmenden Teppichs, umfassend:
- maschinelles Weben eines Gewebes mit einem Gewicht von höchstens 650 g/m², umfassend eine Vorderseite als Nutzfläche und eine Rückseite, umfassend Kett- und Schussfäden aus im Wesentlichen 100% thermoplastischem, flammhemmendem Polyester,
- Herstellung eines Nadelfilzes mit einem Gewicht von maximal 220 g/m² aus im Wesentlichen 100% thermoplastischem flammhemmendem Polyester,
- Laminierung des Nadelfilzes mit einem Gewicht von maximal 180 g/m² auf das Gewebe unter Verwendung einer Zwischenschicht,
**dadurch gekennzeichnet, dass** das Verfahren den zusätzlichen Schritt vor dem Laminieren umfasst, bei dem die Rückseite des Gewebes an einer erhitzten Oberfläche entlanggeführt wird, um einen Teil der Kettfäden auf der Rückseite des mechanisch gewebten Gewebes zumindest teilweise miteinander zu verschmelzen.

11. Das Verfahren nach Anspruch 10, **dadurch gekennzeichnet, dass** die Laminierung die Verwendung von PES als Klebstoff in der Zwischenschicht umfasst.

12. Das Verfahren nach Anspruch 10, **dadurch gekennzeichnet, dass** die Laminierung die Verwendung reaktiver Moleküle zur Bildung thermoreversibler kovalenter Wechselwirkungen in der Zwischenschicht umfasst, wobei es sich bei den thermoreversiblen kovalenten Wechselwirkungen um Michael-Reaktionen, Nitrosodimerisierungsreaktionen, zyklische Anhydridreaktionen, bei denen die Esterverbindungen aufgebaut werden, Urethanbildungsreaktionen, aliphatische Ionenbildungsreaktionen, Phenol-Azlacton-Adduktionsbildungsreaktionen oder Reaktionen zwischen einem ersten Molekül, das eine konjugierte Diengruppe umfasst, und einem zweiten Molekül, das eine Dienophilgruppe umfasst, handelt.

13. Das Verfahren nach Anspruch 10, 11 oder 12, **dadurch gekennzeichnet, dass** das Verfahren den zusätzlichen Schritt vor dem Laminieren umfasst, bei dem die Rückseite des Gewebes an einer erhitzten Oberfläche entlanggeführt wird, um einen Teil der Schussfäden auf der Rückseite des maschinell gewebten Gewebes zumindest teilweise mit einem Teil der Kettfäden zu verschmelzen.

## Claims

1. A flame retardant carpet suitable for use inside means of transport, preferably aircrafts, comprising:
- a mechanically woven fabric with a maximum weight of 650 g/m², comprising a front face as a use surface and a back face, comprising warp and weft yarns of essentially 100% thermoplastic flame retardant polyester,
- a needle felt with a maximum weight of 220 g/m² of essentially 100% thermoplastic flame retardant polyester,
- an intermediate layer between the needle felt and the mechanically woven fabric with a maximum weight of 180 g/m²,
**characterized in that** a portion of the warp threads on the back side of the mechanically woven fabric have at least partially fused to each other.

2. Carpet according to claim 1, **characterized in that** the thread number of the warp and weft threads is 1100 dtex to 4400 dtex.

3. Carpet according to claim 1 or 2, **characterized in that** the number of warp threads per cm of fabric is 8 to 30.

4. Carpet according to one of the preceding claims 1 to 3, **characterized in that** the number of weft threads per cm of fabric is 3 to 10.

5. Carpet according to one of the preceding claims 1 to 4, **characterized in that** the weight of the carpet is at most 950 g/m².

6. Carpet according to one of the preceding claims 1 to 5, **characterized in that** the mechanically woven fabric and the needle felt are laminated to each other with the aid of the intermediate layer.

7. Carpet according to one of the preceding claims 1 to 6, **characterized in that** the intermediate layer comprises polyester adhesive.

8. Carpet according to one of the preceding claims 1 to 6, **characterized in that** the carpet comprises reactive molecules for the formation of thermoreversible covalent interactions in the intermediate layer, in which the thermoreversible covalent interactions are Michael reactions, nitroso dimerization reactions, cyclic anhydride reactions in which ester compounds are composed, urethane formation reactions, aliphatic ion formation reactions, phenol- azlactone adduction formation reactions or reactions between a first molecule, comprising a conjugated diene group and a second molecule comprising a dienophile group .

9. Carpet according to one of the preceding claims 1 to 8, **characterized in that** a part of the weft threads of the mechanically woven fabric has at least partially fused with a part of the warp threads.

10. Method for manufacturing a flame retardant carpet suitable for the interior of means of transport, preferably aircrafts, comprising:
- mechanical weaving of a fabric with a maximum weight of 650 g/m², comprising a front face as a use surface and a back face, comprising warp and weft yarns of essentially 100% flame retardant thermoplastic polyester,
- the manufacture of a needle felt with a maximum weight of 220 g/m² of essentially 100% flame retardant thermoplastic polyester,
- lamination of needle felt with a maximum weight of 180 g/m² to the fabric using an intermediate layer,
**characterized in that** the method comprises the additional step prior to lamination of directing the back face of the fabric along a heated surface to at least partially melt a portion of the warp yarns on the back face of the mechanically woven fabric together.

11. The method of claim 10, **characterized in that** the lamination comprises the use of PES as an adhesive in the intermediate layer.

12. The method of claim 10, **characterized in that** the lamination comprises using reactive molecules to form thermoreversible covalent interactions in the intermediate layer, wherein the thermoreversible covalent interactions are Michael reactions, nitroso dimerization reactions, cyclic anhydride reactions in which ester compounds are composed, urethane forming reactions, aliphatic ion forming reactions , phenol- azlactone adduction forming reactions or reactions between a first molecule comprising a conjugated diene group and a second molecule comprising a dienophile group.

13. The method according to claim 10, 11 or 12, **characterized in that** the method comprises the additional step before lamination of directing the back face of the fabric along a heated surface to at least partially melt a part of the weft yarns at the back face of the mechanically woven fabric with a part of the warp yarns.
